# EUROPÄISCHE PATENTANMELDUNG

(11) **EP 0 670 638 A2**
(43) Veröffentlichungstag der Anmeldung: **06.09.1995**
(21) Anmeldenummer: 95102874.5
(22) Anmeldetag: 01.03.1995
(51) Int. Cl.: H04B 1/38

(54) **Mobilfunkanlage im PCMCIA-Standard**

(30) Priorität: 04.03.1994 DE 4407125
(71) Anmelder: TEMIC TELEFUNKEN microelectronic GmbH, D-74072 Heilbronn (DE)
(72) Erfinder: Schön, Josef, D-85072 Eichstätt (DE)
(74) Vertreter: Maute, Hans-Jürgen, Dipl.-Ing.

(57) **Zusammenfassung**

Bei einem dem Standardformat PCMCIA entsprechenden Funkmodul in der Größe von Kreditkarten, das zwecks Daten- und Fernsprechübertragung in ein Endgerät, beispielsweise einen tragbaren Computer paßt, entspricht die Schnittstelle ebenfalls dem PCMCIA-Standard, der ausschließlich eine digitale Übertragung vorsieht. Erfindungsgemäß werden über diese digitale Schnittstelle auch analoge Daten, insbesondere Sprachinformationen übertragen, weshalb im Endgerät ein A/D-Wandler in vorteilhafter Weise entfällt.

## Beschreibung

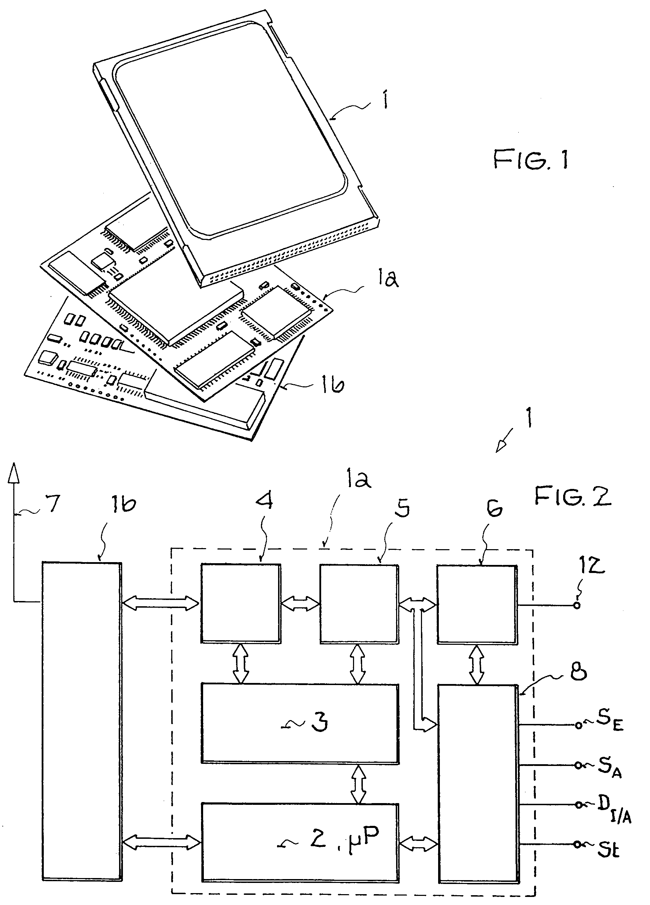

Die Erfindung betrifft eine Mobilfunkanlage im PCMCIA (personal computer memory card international association)-Standard, die im wesentlichen aus einem einen digitalen Basisbandteil und einen Hf-Teil enthaltenden Funkmodul besteht. Zur Durchführung einer drahtlosen Datenkommunikation wird dieses Funkmodul in einen tragbaren Computer gesteckt. Die Figur 1 zeigt ein mit dem Bezugszeichen 1 versehenes Funkmodul, das auf einer Leiterplatte 1a den digitalen Basisbandteil und auf einer weiteren Leiterplatte 1b den Hf-Teil enthält. Ein solches Funkmodul weist ungefähr die Abmessungen einer Kreditkarte auf. Auf einer schmalen Seite des Funkmoduls 1 ist eine Steckerleiste zu erkennen, die die Verbindung mit dem Computer herstellt.

In den Jahren 1990/91 wurde das paneuropäische zellulare Digitalnetz GSM (groupe speciale mobil) in Europa eingeführt, das die Übertragung von Sprache und Daten ausschließlich digital durchführt. Dabei wird die Sprache nicht nur digitalisiert, sondern auch verschlüsselt; ein hierfür entwickelter Sprach-Coder arbeitet mit 13 kbit/s in einem 22,8-kbit/s-Nutzkanal.

Bei einem für das GSM-Mobilfunksystem vorgesehenen Funkmodul nach dem PCMCIA-Standard sieht diese Norm hinsichtlich der Schnittstelle zum Computer lediglich eine digitale Datenübertragung vor. Um die Fernsprechkommunikation im GSM-Mobilfunksystem zu realisieren, müßte auf der Endgeräteseite analoge Sprachinformation digitalisiert werden, wodurch jedoch der gerätemäßige Aufwand zunimmt.

Die Aufgabe der vorliegenden Erfindung besteht demnach darin, eine Mobilfunkanlage der eingangs genannten Art anzugeben, die es ermöglicht im PCMCIA-Standard analoge Sprachinformation einfach zu übermitteln.

Diese Aufgabe wird durch die Merkmale des Patentanspruches 1 gelöst. Hiernach wird über die digitale Schnittstelle im PCMCIA-Standard die analoge Sprachinformation übertragen. Dadurch entfällt die Notwendigkeit auf der Geräteendseite eine Digitalwandlung vorzunehmen.

So kann bei einer bevorzugten Ausführungsform der Erfindung ein mit einem Mikrofon zur Aufnahme gesprochener Sprache ausgerüsteter tragbarer Computer zum Mobiltelefon werden, wobei das Mikrofon und der Lautsprecher des Computers zu einer Freisprecheinrichtung wird. Daneben könnte die Fernsprechkommunikation auch über einen handelsüblichen Handapparat erfolgen, der lediglich über einen Stecker mit dem Computer zu verbinden wäre. Allerdings sind dazu an dem Computer eine Reihe von Modifizierungen durchzuführen, beispielsweise eine entsprechende Funkabschirmung, eine Umschaltvorrichtung für Analog- oder Digitalübertragung sowie eine angepaßte Stromversorgung. Solche zur Aufnahme des GSM-Funkmoduls ausgerüsteten Computer ermöglichen als Palmtop-, Notebook- oder Laptop-Computer neben dem Austausch elektronischer Nachrichten auch einen Fernsprechverkehr.

Des weiteren kann gemäß einer anderen vorteilhaften Weiterbildung der Erfindung als Endgerät zur Aufnahme des GSM-Funkmoduls ein Handapparat verwendet werden, dessen Gehäuse lediglich ein Mikrofon, einen Lautsprecher, eine Tastatur und ggf. auch eine LCD-Anzeige enthält. Ein solcher spezieller Handapparat wird hierdurch zum vollwertigen Mobiltelefon. Da das GSM-Funkmodul den überwiegenden Teil der für ein Mobiltelefon erforderlichen Funktionalität enthält, kann dieser spezielle Handapparat einfach und preiswert aufgebaut werden.

Ferner kann auch ein Autoradio so aufgebaut werden, daß es für die Aufnahme des GSM-Funkmoduls geeignet ist. Hierzu wird ein Mikrofon installiert, das zusammen mit den vorhandenen Lautsprechern als Freisprecheinrichtung dieses Autoradio zum Autotelefon macht. Vorzugsweise könnte auch ein Handapparat vorgesehen werden, der lösbar mit dem Autoradio verbunden wird. Ein solches Autoradio enthält zur Durchführung dieser Funktion zusätzlich eine Ein- und Ausgabeeinheit, die entweder mit den vorhandenen Bedien- und Anzeigeelementen realisiert wird oder auch als Infrarot-Fernsteuerung ausgebildet ist. Schließlich ist noch eine Antennen- und Leistungsanpassung erforderlich.

Weiterhin kann mit diesem GSM-Funkmodul auch ein Telefaxbetrieb aufgenommen werden, wenn ein mobiles Telefaxgerät entsprechend ausgerüstet wird. Dies umfaßt lediglich eine Schnittstellenanpassung.

Um die Flexibilität hinsichtlich der Anwendung weiter zu verbessern, kann das GSM-Funkmodul mit einem Modem für leitungsgebundene Daten- und Sprachübertragung ausgerüstet werden. Hierfür ist nur wenig zusätzliche Hardware notwendig, sondern mit den schon vorhandenen Bausteinen (ein 16 bit-Controller und ein DSP (Quellencodec)) wird die erforderliche Software implementiert. Diese zusätzliche Funktion erlaubt es dem Benutzer, zwischen leitungsgebundener und drahtloser Daten- und Sprachübertragung zu wählen.

Schließlich enthält das GSM-Funkmodul auch eine SIM (Subscriber Identity Module)-Karte, die zur Identifizierung des Teilnehmers dient. Die SIM-Karte enthält Informationen über die Identität des Teilnehmers, den Berechtigungsschlüssel oder die aktuelle Identität des Mobilfunkteilnehmers, also auch Informationen über den aktuellen Aufenthaltsort des Teilnehmers. Somit kann der Teilnehmer das GSM-Funkmodul auch für andere Endgeräte der Mobilfunkanlage verwenden, ohne daß sich der Teilnehmer hierfür eine neue Teilnehmerberechtigung besorgen müßte.

Im folgenden soll ein Ausführungsbeispiel der erfindungsgemäßen Mobilfunkanlage im Zusammenhang mit den Zeichnungen dargestellt und erläutert werden. Es zeigen:
- Figur 2: ein Blockschaltbild eines GSM-Funkmoduls gemäß der Erfindung,
- Figur 3: eine Darstellung eines Laptop-Computers als Endgerät der erfindungsgemäßen Mobilfunkanlage,
- Figur 4: eine Darstellung eines Autoradios als Endgerät der erfindungsgemäßen Mobilfunkanlage,
- Figur 5: eine Darstellung eines Faxgerätes als Endgerät der erfindungsgemäßen Mobilfunkanlage und
- Figur 6: eine Darstellung eines Mobiltelefons als Endgerät der erfindungsgemäßen Mobilfunkanlage.

Das digitale GSM-Mobilfunkkommunikationssystem stellt eine europaweite Standardisierung dar, das beispielsweise in der Bundesrepublik Deutschland auch D-Netz genannt wird. Dieses GSM-Mobilfunknetz erlaubt neben der Telefonie auch die Installation verschiedenster Daten- und Telematik-Dienste. Den Teilnehmern eines solchen GSM-Mobilfunknetzes wird ein Funkmodul gemäß Figur 1 zur Verfügung gestellt, das - wie oben schon beschrieben wurde - ungefähr die Größe einer Kreditkarte aufweist und dem PCMCIA-Standard entspricht. In Verbindung mit einem Endgerät ermöglicht dieses Funkmodul den drahtlosen Austausch elektronischer Nachrichten innerhalb dieses GSM-Mobilfunknetzes. Hierbei muß natürlich auch dieses Endgerät dem weltweit gültigen Standardformat PCMCIA entsprechen.

Der Aufbau und die Funktion eines solchen GSM-Funkmoduls im PCMCIA-Standard soll anhand der Figur 2 erläutert werden. Hiernach sind folgende Funktionseinheiten vorgesehen: eine den Hf-Teil enthaltende Sende- und Empfangseinheit 1b, die nach Figur 1 auf einer Leiterplatte realisiert ist; den auf einer weiteren Leiterplatte 1a realisierten Basisband-Teil, der die für den eigentlichen Mobilfunk erforderlichen Funktionseinheiten umfaßt: Einen System-Controller 2 als zentrale Steuereinheit, einen digitalen Basisband-Prozessor 4, einen Sprach-Codec (Sprach-Codierer/Decodierer) 5, einen Synthesizer 3 und eine Schnittstelle 8 im PCMCIA-Standard. Ein Modem 6 kann wahlweise vorgesehen werden, falls ein Benutzer neben einer drahtlosen Sprach- und Datenkommunikation auch eine leitungsgebundene Sprach- und Datenkommunikation über einen Anschluß 12 durchführen möchte. Funktionell wird das Modem 6 nahezu mit den schon vorhandenen Funktionseinheiten realisiert.

Die Schnittstelle 8 stellt die Verbindung zu einem Endgerät her. Dabei werden über zwei Leitungen S_{E} (Eingang) und S_{A} (Ausgang) analoge Sprachinformationen übertragen, während über eine Leitung D_{I/A} digitale Daten ausgetauscht werden. Ein letzter Anschluß St dient zur Übertragung von Steuerdaten, beispielsweise ob digitale oder analoge Daten übertragen werden.

Das Basisband-Teil hat im Sendemodus die Aufgabe eine Sprachdatenreduktion bzw. bei Übermittlung von digitalen Daten eine Informationsreduktion und anschließend eine Kanalcodierung durchzuführen. Umgekehrt erfolgt im Empfangsmodus zunächst eine Kanaldekodierung und danach eine Sprach- bzw. Informationssynthetisierung. Schließlich übernimmt dieses Basisband-Teil auch das gesamte Systemmanagement. Die Wirkungsweise der einzelnen Funktionseinheiten ist bekannt und soll daher nicht beschrieben werden.

Das für das GSM-Mobilfunknetz vorgesehene Funkmodul nach Figur 2 kann bei entsprechender Modifikation auch in dem in den USA installierten analogen AMPS (Advanced Mobile Phone System)-Mobilfunknetz eingesetzt werden. Hierzu werden alle über die Schnittstelle 8 eingehenden digitalen Daten in dem Modem 6 analogisiert und in dem Basisband-Prozessor 4 einer analogen Bearbeitung unterworfen. Somit kann die Funktionseinheit 5, also der Sprach-Codec entfallen. Werden dagegen analoge Sprachinformationen über die Schnittstelle 8 gesendet oder empfangen, so kann eine Analogwandlung mittels des Modems 6 unterbleiben. In diesem Fall ist also das Modem 6 eine unverzichtbare Funktionseinheit, während dieses bei einem GSM-Funkmodul nicht notwendig ist.

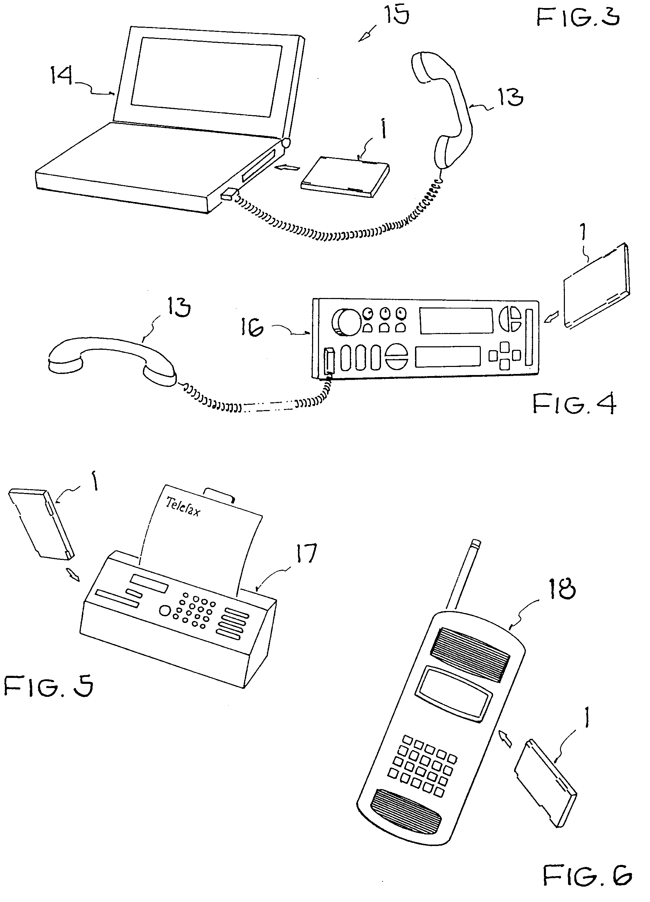

Figur 3 zeigt nun ein Endgerät, nämlich einen Laptop-Computer 15 zur Aufnahme des oben beschriebenen Funkmoduls 1. Hierzu muß dieser tragbare Computer gegenüber handelsüblichen Geräten entsprechend ausgerüstet sein. Hierzu sind eine Funkabschirmung gegenüber dem Computer, eine geeignete Stromversorgung sowie eine Umschaltvorrichtung für Analog- oder Digitalübertragung erforderlich. Ferner ist dieses Laptop mit einem Mikrofon und Lautsprecher 14 bzw. alternativ mit einem Handapparat 13 ausgestattet. Dieses Endgerät ermöglicht nun in einem GSM- bzw. AMPS-Mobilfunknetz neben der Durchführung von Daten- und Telematik-Diensten auch eine Fernsprechkommunikation.

Ein weiteres Endgerät zeigt die Abbildung 4 mit einem Autoradio 16, das mit einer Schnittstelle zur Aufnahme des oben beschriebenen Funkmoduls 1 ausgerüstet ist. Ferner ist ein Mikrofon sowie eine Ein- und Ausgabeeinrichtung vorzusehen, wobei diese Ein- und Ausgabeeinrichtung zur Eingabe der Telefonnummern als Nummernspeicher oder zur Anrufumleitung dienen kann. Diese Einrichtung kann entweder mit der am Radio vorhandenen Tastatur und Anzeige realsiert werden oder mit einer separaten - in der Figur 4 nicht dargestellten - Infrarot-Fernbedienung. Schließlich ist gegenüber einem üblichen Autoradio auch eine Antennen- und Leistungsanpassung durchzuführen. Damit wird dieses Autoradio 16 zu einem Autotelefon, wobei über die Lautsprecher und das Mikrofon als Freisprecheinrichtung oder alternativ über einen Handapparat 13, der mit dem Autoradio verbunden ist, Fernsprechkommunikation möglich ist.

Schließlich kann auch gemäß Figur 5 ein mobiler Faxbetrieb mit einem entsprechend ausgebildeten Faxgerät durchgeführt werden. Hierzu weist das Faxgerät 17 eine Schnittstelle zur Aufnahme des Funkmoduls 1 auf.

Nach Figur 6 wird ein einfacher Handapparat, der lediglich Mikrofon, Lautsprecher, Tastatur sowie eine LCD-Anzeige enthält, durch die Aufnahme des Funkmoduls 1 zu einem vollwertigen Mobiltelefon.

Mit dem hier beschriebenen erfindungsgemäßen Funkmodul ergeben sich vielfache Anwendungsmöglichkeiten für den Besitzer eines GSM-Funkmoduls in einem GSM-Mobilfunknetz bzw. eines AMPS-Funkmoduls in einem AMPS-Mobilfunknetz.

Die GSM-Spezifikationen schreiben eine SIM (Subscriber Identify Modul)-Karte vor, die in dem GSM-Funkmodul realisiert ist. So kann der Besitzer eines solchen GSM-Funkmoduls dieses im gesamten Bereich eines GSM-Mobilfunknetzes die entsprechenden Endgeräte benutzen, so daß das System sofort weiß, wo sich der Teilnehmer befindet. Dieser Teilnehmer braucht nur für eine einzige Zugangsberechtigung zu bezahlen.

In einem AMPS-Mobilfunknetz ist jedoch keine SIM-Karte vorgesehen, da für jedes Gerät eine Zugangsberechtigung erforderlich ist, also für jedes Gerät eine Grundgebühr entrichtet wird. Mit einem erfindungsgemäßen AMPS-Funkmodul, das eine SIM-Karte enthält, wird nicht mehr das Endgerät personalisiert, sondern das AMPS-Funkmodul, so daß für alle zu benutzenden Endgeräte nur noch eine einzige Zugangsberechtigung erforderlich wird.

## Patentansprüche

1. Mobilfunkanlage für Daten- und Fernsprechübertragung mit einem einen Basisbandteil (1a) und einen Hf-Teil (1b) enthaltenden, dem Standardformat PCMCIA entsprechenden Funkmodul (1), das zur Durchführung von Sprach- und Datenkommunikation über eine gemäß dem PCMCIA-Standardformat definierte digitale Schnittstelle (8) mit einem Endgerät (15, 16, 17, 18) lösbar verbunden wird, wobei über diese Schnittstelle (8) neben digitalen Daten auch analoge Daten, insbesondere analoge Sprachinformationen übertragen werden.

2. Mobilfunkanlage nach Anspruch 1, dadurch gekennzeichnet, daß als Endgerät ein tragbarer Computer (15) vorgesehen ist.

3. Mobilfunkanlage nach Anspruch 1 oder 2, dadurch gekennzeichnet, daß für den Betrieb als Mobiltelefon (18) das Endgerät ein Handapparat darstellt, der einen Lautsprecher, ein Mikrofon und eine Tastatur aufweist.

4. Mobilfunkanlage nach einem der vorangehenden Ansprüche, dadurch gekennzeichnet, daß für den Betrieb als Autotelefon das Endgerät ein Autoradio (16) darstellt.

5. Mobilfunkanlage nach einem der vorangehenden Ansprüche, dadurch gekennzeichnet, daß für den Telefaxbetrieb das Endgerät ein mobiles Telefaxgerät (17) darstellt.

6. Mobilfunkanlage nach einem der vorangehenden Ansprüche, dadurch gekennzeichnet, daß das Funkmodul (1) ein Modem (6) für leitungsgebundene Daten- und Sprachübertragung aufweist.

7. Mobilfunkanlage nach einem der vorangehenden Ansprüche, dadurch gekennzeichnet, daß das Funkmodul (1) eine SIM-Karte enthält.

8. Verwendung der Mobilfunkanlage nach einem der vorangehenden Ansprüche für ein GSM-Mobilfunknetz.

9. Verwendung der Mobilfunkanlage nach einem der Ansprüche 1 bis 7 für ein AMPS-Mobilfunknetz.
